# EUROPÄISCHE PATENTSCHRIFT

(11) **EP 1 750 978 B1**
(45) Veröffentlichungstag und Bekanntmachung des Hinweises auf die Patenterteilung: **23.01.2008**
(21) Anmeldenummer: 06704574.0
(22) Anmeldetag: 30.01.2006
(51) Int. Cl.: B60R 21/20

(54) **ÜBERZUG ALS ABDECKUNG FÜR EINEN AIRBAG UND VERFAHREN ZU DESSEN HERSTELLUNG**
COVER FOR AN AIRBAG AND METHOD FOR THE PRODUCTION THEREOF
COUCHE DE REVETEMENT POUR UN COUSSIN GONFLABLE ET PROCEDE DE PRODUCTION DE LADITE COUCHE

(30) Priorität: 20.04.2005 EP 05008603
(43) Veröffentlichungstag der Anmeldung: 14.02.2007
(73) Patentinhaber: Eissmann Automotive Deutschland GmbH, 72574 Bad Urach (DE)
(72) Erfinder: KAULBERSCH, Nicole, 70771 Leinfelden (DE)
(74) Vertreter: Mammel, Ulrike
(86) Internationale Anmeldenummer: PCT/EP2006/000782
(87) Internationale Veröffentlichungsnummer: WO 2006/111212

(56) Entgegenhaltungen:
- EP-A- 1 153 809
- DE-A1- 10 129 618
- US-A- 5 084 122
- US-A1- 2004 183 280
- US-B1- 6 402 189

## Beschreibung

Die vorliegende Erfindung betrifft einen Überzug als Abdeckung für einen Airbag und ein Verfahren zu dessen Herstellung.

Airbags sind heutzutage in Kraftfahrzeugen an verschienenen Stellen, zum Beispiel in Lenkrädern, Armaturenbrettern, Türen, Sitzen, Dachverkleidungen usw., integriert. Für eine zuverlässige Funktionsweise des Airbags ist es notwendig, dass der Kunststoffträger in allen seinen Schichten eine bzw, mehrere Materialschwächungen, sog. Sollbruchstellen, aufweist, die den Schusskanal des Airbags definieren.

Im Bereich der Abdeckungen eines Airbags ist es - vor allem beim Werkstoff Leder - üblich, die Abdeckung des Airbags im Bereich der Airbagklappe mit einer sogenannten Airbagdokumentationsnaht zu versehen, so dass sich diese bei einem Aufprall ungehindert öffnen und der Airbag sich entfalten kann.

Aus dem US-Patent 5,085,122 ist ein Überzug als Abdeckung eines Airbags sowie ein Verfahren seiner Herstellung bekannt, bei dem der Überzug ein Bezugsmaterial ist, das im Bereich der Berandung der Airbagklappe voneinander beabstandete, das Material vollständig durchdringende Perforationen aufweist, die eine linienförmige Form aufweisen, wobei die Schlitzlänge zwischen 2 und 10 mm beträgt.

Aus optischen Gründen beziehungsweise wegen des Designs fordern jedoch die Kraftfahrzeughersteller zunehmend, dass beispielsweise der Beifahrerairbag, der im Armaturenbrett integriert ist, auf der dem Insassen zugewandten Seite hin unsichtbar gestaltet ist. Dazu wird das Armaturenbrett mit der darin integrierten Airbagklappe mit einem Überzug ohne Airbagdokumentationsnaht Versehen. Dieser Überzug muss allerdings im Bereich der Berandung der Airbagklappe ebenfalls eine Materialschwächung aufweisen, so dass die sichere Öffnung der Airbagklappe und die Entfaltung des Airbags bei einem Aufprall gewährleistet bleibt.

Das Öffnen des Überzugs entlang der Materiaischwächurigen muss zudem innerhalb eines vorgegebenen Zeitfensters erfolgen. Ebenso muss ein unkontrollierter Partikelflug durch umherfliegende Bruchstücke des Überzugs auf jeden Fall vermieden werden.

Solche Airbagabdeckungsüberzüge sind aus unterschiedlichen Materia-Hen bekannt, beispielsweise aus Kunststofffolien, Bezugssrtoffen, Textilien, Slush, Kunstleder oder aus Leder. Gerade bei gehobenen Fahrzeugausstattungen werden die Überzüge immer häufiger aus Leder hergestellt. Leder weist keine homogenen Materialeigenschaften auf und besitzt in seiner gewachsenen dreidiniensionalen Faserstruktur eine außerordentlich hohe Festigkeit, was bei Leder eine besonders starke Materialschwächung erforderlich macht, um überhaupt eine ungehinderte Entfaltung des Airbags zu ermöglichen.

Diese funktionellen Anforderungen unter gleichzeitiger Einhaltung der Designvorgabe "Unsichtbarkeit" stellen eine große technische Herausforderung dar, die speziell bei dem Werkstoff Leder als technisch sehr anspruchsvoll einzustufen ist.

Um ein effektives Aufreißen bei ansprechender optischer Gestaltung zu erreichen, wurde in der DE 101 26 911 A1 vorgeschlagen, an der Innenseite der Abdeckung Mehrfachschnittlinien vorzusehen, durch die auch bei tiefen Temperaturen eine zuverlässige und definierte Rissbildung entlang der Sollbruchlinie ohne unkontrollierten Partikelflug erreicht werden kann. Um eine ansprechende Oberfläche zu erhalten, sollen die Einschnitte in jedem Fall eine durchgängig unter der Wandstärke der Dekorhaut liegende Schnitttiefe besitzen,so dass die Restwandstärke des Materials erhalten bleibt.

Schwächungen des Überzugmaterials durch Einritzen haben jedoch den Nachteil, dass die Kerbe bei einem tiefen Einschnitt aufklafft und somit die Kerbe auch auf der Sichtseite des Überzugs im Laufe der Zeit durch die Temperaturwechsel, denen der Überzug im Kraftfahrzeug unterworfen ist, sichtbar wird. Bei geringeren Schnitttiefen wird das Aufreißverhalten negativ beeinflusst.

In der EP 1 213 193 A1 wird vorgeschlagen, die Airbagabdeckung im Bereich der Berandung des Airbagkastendeckels zu perforieren und anschließend wieder mit einer geeigneten Spachtelmasse zuzuspachteln, um die Öffnungen auf der Sichtseite zu kaschieren. Hierdurch kann zwar erreicht werden, dass die Perforationen von den Fahrzeuginsassen nicht mehr erkannt werden, allerdings ist dieses Verfahren aufwändig, da das Leder nach dem Einbringen der Perforationen wieder zum Lederlieferanten zurückgebracht werden muss.

Um für die Fahrzeuginsassen unsichtbare Airbagüberzüge mit kontrolliertem Aufreißverhalten bereitzustellen, schlägt die DE 100 55 546 A1 vor, entlang einer Sollbruchlinie verlaufende Schwächungsstrukturen zu erzeugen, wobei die Schwächungsstrukturen mittels eines Stanzwerkzeugs an der Materialinnenseite erzeugte Ausnehmungen sind. Durch die geeignete Wahl der Abfolge und Tiefe der Ausnehmungen soll bei unbeschädigter, in Richtung des Fahrzeuginneren weisender Außenseite der Abdeckung das gewünschte Aufreißverhalten erreicht werden, wobei bei diesem Verfahren wiederum eine Restwandstärke des Materials erhalten bleibt.

Wenn auch mit diesem Überzug das gewünschte Aufreißverhalten erreicht und die nach außen weisende Oberfläche der Abdeckung als "Restwand" intakt bleibt, so dass keine unerwünschten, nach außen sichtbare Schnitte sichtbar sind, erfüllen auch diese Abdeckungen nicht die geforderte Unsichtbarkeit, da wiederum die Schnitte unter Temperatureinfluss aufklaffen und somit auf der Sichtseite des Überzugs sichtbar werden.

Speziell bei dem Naturmaterial Leder kann die geforderte Unsichtbarkeit mittels der beschriebenen Methodik bereits unter Raumtemperatur nicht gewährleistet werden, da im Zuge des stanzenden Verfahrens die Lederfasern stark gestaucht und komprimiert werden. Durch diese "lederunfreundliche" Materialbehandlung weist das Leder auf der Sichtseite sichtbare speckig glänzende Bereiche auf.

Die DE 196 36 428 A1 lehrt, die Schwächungslinie für die Sollbruchstelle als eine Perforationslinie (Sacklöcher) auszubilden, die die Airbagverkleidung annähernd an die dem Fahrzeuginsassen sichtbare Oberfläche durchdringt. Bei den aus dieser Anmeldung bekannten "Perforationslinien" handelt es sich nicht um durchgängige Perforationen, sondern um Sacklöcher, somit wiederum um Materialschwächungen mittels Restwandstärke.

Um die optische Wahrnehmbarkeit von sich gegebenenfalls bildenden Vertiefungen der verbleibenden Restwand im Perforationslochboden an der Sichtfläche zu erschweren lehrt diese Schrift, die Sacklöcher abweichend von der Schwächungslinie anzuordnen, beispielsweise in einer stochastischen Linienführung oder auch in definiertem Linienverlauf wie beispielsweise sinus- oder sägezahnförmig.

Schwächungen mittels bestehender Restwand in der Rückseite des Überzugmaterials führen, wie erwähnt, bei Klimawechseltests immer zum Versagen der Sollbruchstellen.

Weiterhin ist bekannt, den Überzug mittels Laserverfahrens zu schwächen. Schwierigkeiten treten bei den laserbasierten Verfahren jedoch auf, da die gewünschte Unsichtbarkeit der Schwächung, insbesondere bei hellen Lederfarben, nicht gewährleistet werden kann. Auch haben solche lasergeschwächten Materialien bei Schussversuchen - voraussichtlich wegen des Verhärtens in den Randbereichen der erzeugten Schwächungen durch die energiereiche Strahlung - zu zu hohen Öffnungszeiten geführt.

Um das Problem der Unsichtbarkeit der Sollbruchlinie in der Abdeckung auch unter Temperatur- und Feuchtigkeitseinwirkung und Materialalterung zu lösen, wurde in der DE 102 31 131 A1 vorgeschlagen, die äußere Airbagabdeckung unversehrt zu lassen und lediglich eine zweite Schicht vorzusehen, die den Verlauf der Reißnaht vorgeben soll. Die Abdeckung und die zweite Schicht sind miteinander verbunden, so dass infolge der eingeschränkten Dehnfähigkeit der beiden miteinander verbundenen Schichten die Airbagabdeckung in dem Bereich, in dem äusschließlich in der zweiten Schicht ein Schwächungsbereich vorliegt, aufreißen soll. Eine solche Abdeckung zeigt jedoch nicht das gewünschte definierte Aufreißverhalten, und es kommt zudem teilweise zu unerwünschtem Partikelflug.

Der vorliegenden Erfindung liegt die Aufgabe zugrunde, einen Überzug in Form einer Abdeckung eines Airbags sowie ein Verfahren zu seiner Herstellung vorzuschlagen, dessen Schwächung ein zuverlässiges und auch unter Klimaeinflüssen bestehendes Reißverhalten gewährleistet, wobei die Schwächung von der Sichtseite her und damit im Fahrzeuginnenraum zu keiner Zeit zu sehen ist und die Schwächung zudem einfach in den Überzug eingebracht werden kann.

Die Aufgabe wird durch einen Überzug zur Abdeckung eines Airbags im Innenraum eines Fahrzeugs gelöst, der im Bereich der Berandung einer Airbagklappe voneinander beabstandete Perforationen aufweist, die das Material durchdringen, wobei die Perforationen eine im Wesentlichen linienförmige Form aufweisen und die Länge einer Perforation höchstens 0,8 mm beträgt. Erstaunlicherweise wurde festgestellt, dass mittels solcher, das Material vollständig durchdringender Perforationen mit Längen im Mikrometerbereich Überzüge mit dem gewünschten Aufreißverhalten herstellbar sind und diese trotz der das Leder durchquerenden Perforationen von der dem Insassen zugewandten Seite her nicht sichtbar sind.

Vorzugsweise sind die Perforationen hintereinander angeordnet. Allerdings können die Perforationen auch statistisch oder chaotisch über einen gewissen Bereich angeordnet sein.

Des Weiteren kann mittels dieser im Mikrometerbereich befindlichen Perforationen ein Sichtbarwerden der Schwächungsstrukturen unter Klimaeinflüssen gänzlich oder wenigstens nahezu gänzlich ausgeschlossen werden.

Das aus dem Stand der Technik bekannte nachträgliche Verschließen der Perforation zum Unsichtbarmachen ist somit nicht erforderlich, so dass das Bezugmaterial, wie beispielsweise Leder, also vollständig zugerichtet sein kann, bevor die. Perforationen eingebracht werden.

Die längliche (linienförmige) Ausdehnung der Perforationen erleichtert außerdem das Aufreißen des Überzugs. Im Gegensatz zum Einschneiden von Kerben klaffen die länglichen Perforationen auch unter Klimaeinflüssen nicht auf, so dass sie trotz hoher Wirksamkeit optisch nicht auffal-Jen.

Insbesondere beim Werkstoff Leder sind die länglichen Ausdehnungen der Perforationen von der Sichtseite her unsichtbar, da die Zurichtung des Materials sich nach Einbringen der Mikroperforationen selbsttätig wieder verschließt.

Die Perforationen sind hierzu hintereinander angeordnet und voneinander beabstandet. Vorzugsweise beträgt die Länge einer Perforation höchstens 0,6 mm, wobei der bevorzugte Bereich zwischen 0,2 und 0,4 mm liegt, somit in einem Bereich, der in etwa der durchschnittlichen Größe einer Pore im Leder entspricht. Besonders bevorzugt ist ein Bereich zwischen 0,25 und 0,35 mm.

Durch das vollständige Durchdringen des Bezugsmaterials mittels der Perforationen wird zudem erstaunlicherweise eine deutliche Verbesserung der prozentualen Schwächung des Leders im Vergleich zu den Restwandschwächungsverfahren erreicht. Dies ist darauf zurückzuführen, dass die Ledersichtseite, die die höchste Zugfestigkeit aufweist, bei der Restwandschwächung nur komprimiert und somit die Fasern nicht durchtrennt werden, wobei durch das Komprimieren der bei der Restwandschwächung verbleibenden Restwand diese zusätzlich noch stabilisiert und damit ein Zerreißen erschwert wird.

Gerade diese Außenschicht des Leders mit der höchsten Zugfestigkeit wird jedoch bei dem erfindungsgemäßen Überzug mit den durchgehen- , den Perforationen durchtrennt, was insgesamt zu besseren Aufreißeigenschaften des erfindungsgemäßen Überzugs führt.

Unter einer solchen erfindungsgemäßen Perforation wird ein jeder Einstich, ein jedes Loch, eine jede Öffnung, ein jeder Schnittkanal und ein jedes Durchlöchertsein in dem Überzugsmaterial verstanden, die das Bezugsmaterial vollständig durchdringt. Bevorzugt sind die Perforationen Schnitt- oder Stanzkanäle, die durch die Form des Werkzeugs ein eher längliches Aussehen aufweisen. Vorzugsweise ist die Form einer Perforation länglich und insbesondere im Wesentlichen rechteckig, insbesondere in Form einer kurzen geraden Linie.

Zur Einbringung einer solchen Perforation ist das hierzu verwendete Werkzeug vorzugsweise eine Perforationsklinge oder Perforationsschneide mit einer Klingen- oder Schneidenlänge lk von maximal 0,8 mm, vorzugsweise einer Klingen- oder Schneidenlänge lk von maximal 0,6 mm und im besonders zu bevorzugenden Bereich mit einer klingen- oder Schneiden länge lk zwischen 0,2 und 0,4 mm, vorzugsweise zwischen 0,25 und 0,35 mm, insbesondere etwa 0,3 mm die beidseitig angeschliffen ist, so dass eine gerade, klingenförmige und sehr scharfe Schnittfläche S entsteht.

Nachdem die Perforation mit einer scharfen Klinge oder Schneide durchgeführt wird, werden auf die Länge der Perforation sämtliche sich über die Materialtiefe erstreckende Fasern des Leders durchtrennt. Auch ist die Breite der Perforation äußerst gering und liegt im Allgemeinen bei höchstens 0,2 mm und vorzugsweise maximal 0,1 mm, wobei die Breite einer Perforation besonders bevorzugt über die gesamte Länge im Wesentlichen konstant ist.

Vorzugsweise sind die Perforationen im Wesentlichen regelmäßig voneinander beabstandet, da hierdurch ein gutes Aufreißverhalten entlang der gesamten Airbagklappe erzielt werden kann. Eine partielle Verdichtung der Perforationen auf bestimmten Stellen oder in bestimmten Bereichen kann das Aufreißverhalten in diesem Bereich ebenfalls positiv beeinflussen.

Der Abstand a zwischen dem Mittelpunkt einer Perforation und dem benachbarten Mittelpunkt der nächsten Perforation hängt von der Länge der Perforation 1 und von den Materialeigenschaften ab und davon, ob die Perforationen entlang einer Linie oder entlang mehrerer Linien oder anderweitig angeordnet sind. Um überhaupt ein Aufreißen zu ermöglichen, sollten die Mittelpunkte zweier Perforationen nicht weiter als das 3-fache der Perforationslänge l voneinander entfernt sein, und insbesondere zwischen dem 1,1- bis 1,5-fachen der Länge 1 einer Perforation liegen, insbesondere dann, wenn die Perforationen entlang einer gemeinsamen Linie angeordnet sind. Im Prinzip ist selbst ein Abstand a = 1, möglich, da aufgrund der Materialeigenschaften vom Leder immer noch minimale Materialstege verbleiben.

Sind die Perforationen auf zwei im Wesentlichen parallel zueinander verlaufenden Linien (Schwächungsgeometrien) angeordnet, so beträgt der Abstand a der Mittelpunkte zweier benachbarter Perforationen auf einer Linie zueinander maximal das 3-fache, insbesondere etwa das 1,3 bis 1,7-fache der Länge 1 einer Perforation. Besonders vorteilhaft ist, wenn dann die auf der anderen Linie angeordneten. Perforationen im selben Abstand a voneinander beabstandet sind, wobei eine Perforation auf der ersten Linie etwa zwischen zwei Perforationen auf der zweiten Linie angeordnet ist. Der Abstand b der beiden Linien zueinander sollte maximal die 1,5-fache Perforationslänge l und besonders bevorzugt die 0,3- bis 0,7-fache Perforationslänge l betragen. Selbstverständlich ist es ebenfalls möglich, mehr als zwei, insbesondere im Wesentlichen parallel zueinander verlaufende Linien vorzusehen.

Nachdem die Perforationen sich oberhalb der Berandung der Airbagklappe befinden sollten und es produktions- und materialbedingt zu Abweichung des Sitzes der Schwächungsstruktur kommen kann, sieht eine weitere bevorzugte Ausführungsform vor, die Schwächungsstruktur nicht als gerade verlaufende Linie, sondern als eine einen Bereich einer bestimmten Breite schwächende Linie, beispielsweise durch einen zickzack- , sinus- oder einen wellenförmigen Verlauf oder eine andere, sich wiederholende gleichförmige Geometrie, auszubilden. Hierdurch wird erreicht, dass auch eine durch Lederdehnung oder eine geringfügig gegenüber der Lage des Airbags versetzt angeordnete bereichsweise Schwächung noch oberhalb der Öffnungslinie der Airbagklappe zu liegen kommt.

Ein weiterer wesentlicher Vorteil dieses nichtlinearen Schwächungsverlaufs ist, dass das Auge solche nichtlinearen oder nur über eine kurze Strecke gerade Linie nicht mehr als Linie wahrnimmt, das heißt, dass die optische Wahrnehmbarkeit der Perforationen zudem auch noch durch die nichtgerade Linienführung reduziert wird. Durch die Ausrichtung der Schwächungsstruktur in Zickzack-, Sinus- oder Wellenform wird zudem ein Aufreißverhalten erzeugt, das dauerhaft ein sicheres Ansprechverhalten unter einer gewünschten Belastung gewährleistet.

Durch das Vorsehen mehrerer Schwächungslinien und die versetzte Anordnung der Perforationen auf zwei benachbarte Linien sowie die Ausrichtung der Perforationsklinge oder -schneide für das gewünschtes Linienbild einer Schwächungsstruktur (Drehung der Perforationsklinge/Fluchten der Perforationen mit der Schwächungsstruktur) kann die Zuverlässigkeit des Aufreißens des Überzugs noch erhöht werden.

Ist der Verlauf der Schwächungsstrukturen wellenlinienförmig oder sinusähnlich, so beträgt der Maximalwert der Elongation der Schwächungsstruktur (Amplitude) im Allgemeinen zwischen 0,75 mm und 3,5 mm, insbesondere etwa 1,25 mm. Durch den wellenförmigen Verlauf der Linie wird auch die natürliche Oberflächenbeschaffenheit des Leders imitiert, was zudem dazu beiträgt, dass die Schnitte für das menschliche Auge unsichtbar sind.

Auch ein zickzackförmiger Verlauf der Linie ist möglich, wobei jedoch zwei Maxima der Zickzacklinie nicht zu eng benachbart sein sollten, um einen Partikelflug zu vermeiden. Im Allgemeinen sollte der Abstand zweier Spitzen voneinander nicht weniger als 2 mm betragen und insbesondere zwischen 2,5 mm und 10 mm liegen.

Das Bezugmaterial selbst kann eine Dicke von beispielsweise 0,4 mm bis 1,6 mm aufweisen, insbesondere, wenn es nur aus einer Materialschicht besteht. Bevorzugt ist das Bezugsmaterial Leder oder umfasst als Bezugsmaterial Leder, Leder mit einer Beschichtung oder Leder im Materialverbund oder Kunstleder bzw. Slush.

Die Schwächung eines Verbundes aus zwei fest miteinander verbundenen Materialschichten, wobei die eine Materialschicht aus einem automobilen Dekormaterial (Leder, Kunstleder oder ähnlichem) und die zweite Materialschicht aus einem Schaum, Abstandsgewirk, Vlies, Textil oder ähnlichem besteht, ist nach dem beschriebenen Verfahren ebenfalls möglich.

Die Erfindung betrifft auch ein Verfahren zur Herstellung eines Überzugs zur Abdeckung eines Airbags im Innenraum eines Kraftfahrzeugs, bei dem - vorzugsweise von der Innenseite des Bezugmaterials (Fleischseite des Leders) her - in dessen unkaschiertem Zustand in dem Bereich, der nach dem Aufkaschieren des Bezugmaterials auf die Abdeckung des Airbags die Berandung der Airbagklappe im Wesentlichen abdeckt, hintereinander angeordnete, voneinander beabstandete, das Bezugsmaterial vollständig durchdringende Perforationen eingebracht werden, deren Länge maximal 0,8 mm beträgt.

Vorzugsweise findet die Herstellung der Perforationen ohne Wärmeentwicklung statt, da dadurch nicht wie beispielsweise beim Einsatz von Lasern, die einzelnen Fasern des Leder thermisch angegriffen werden und folglich verhärten.

Zur Herstellung der Perforationen kann ein Werkzeug mit einer länglichen schneidenartigen Perforationsklinge verwendet werden. Bei Perforationen, die in Linienform ein beliebiges Muster darstellen können, wird das Werkzeug bei fortlaufenden Perforationen immer so gedreht, dass die Längsrichtung der Klinge auf die zu erzielende Linienform ausgerichtet ist, das heißt, möglichst exakt die gewünschte Linienform nachvollzieht beziehungsweise parallel oder weitestgehend deckungsgleich zur gewünschten Linienform ausgerichtet ist.

Weitere Alternativen der vorliegenden Erfindung sehen vor, das Bezugsmaterial mit einer zweiten Materialschicht vorzukaschieren und erst dann zu schwächen. Auch kann das Bezugsmaterial nicht von der Velourseite/Rückseite, sondern von der Sichtseite geschwächt werden. Eine weitere Ausgestaltung sieht vor, zur Schwächung des Bezugsmaterials ein stempelartiges Werkzeug mit einer Vielzahl an Einzelklingen zu einer gleichzeitigen Perforation einzusetzen.

Unsichtbare Schwächung im Airbagbezug haben weiterhin den Vorteil, dass sie infolge ihrer Unsichtbarkeit keinen designtechnischen Forderungen unterliegen und somit definiert über dem geschwächten Bereich des Trägermaterials platziert werden können. Jeder gewünschte Radius ist realisierbar, da keine Rücksicht auf das Design genommen werden muss und sich die technische Ausgestaltung des unsichtbaren Airbags nur nach seiner Funktionalität richten kann. So ist es beispielsweise nicht mehr erforderlich, die Airbagsollbruchstelle (nach dem Stand der Technik - die Airbagnaht) parallel zu den Ziernähten zu setzen.

Die Erfindung wird nachfolgend anhand von Figuren, Ausfährungsbeispieien und Vergleichstests näher beschrieben. Es zeigen:
- Figur 1: einen Querschnitt durch einen erfindungsgemäßen Überzug mit Perforation,
- Figur 2: einen Querschnitt durch einen erfindungsgemäßen Überzug im Materialverbund mit Perforation,
- Figur 3: eine Draufsicht auf die Innenseite der Teilausschnitte des Überzugs in Figur 1 oder 2 mit Perforationen, die eine einer Geraden folgenden Schwächungsstruktur bilden,
- Figur 4: eine Draufsicht auf die Innenseiten der Teilausschnitte des Überzugs Figur 1 oder 2 mit Perforationen, die eine von einer Geraden abweichende Schwächungsstruktur bilden,
- Figur 5: eine Draufsicht auf die Innenseite eines Teilausschnitts eines Überzugs mit wellenförmigen Schwächungsstrukturen,
- Figur 6: eine Draufsicht auf die Innenseite eines Teilausschnitts eines Überzugs mit partieller Verdichtung der Perforationen auf einer besonders zu bevorzugenden Stelle,
- Figur 7.1: eine Frontansicht eines Werkzeugs zum Einbringen von Perforationen in den Überzug,
- Figur 7.2: eine Seitenansicht eines Werkzeugs zum Einbringen von Perforationen in den Überzug,
- Figur 7.3: eine Draufsicht eines Werkzeugs zum Einbringen von Perforationen in den Überzug,
- Figur 8: eine vergrößerte Darstellung verschiedener weiterer Schwächungsverläufe und Lage und Abstände der Perforation zueinander und
- Figur 9: einen Vergleichsversuch Klimawechseitest.

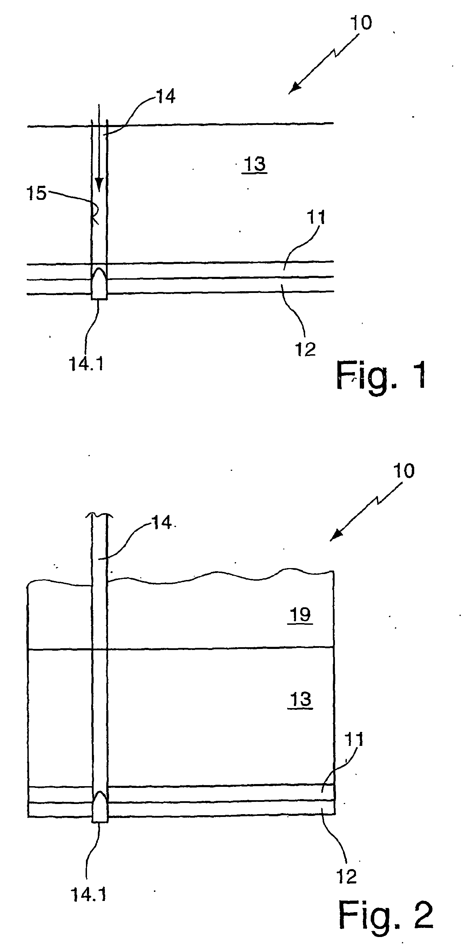

Die Figur 1 zeigt im Querschnitt ein Bezugmaterial 10 aus Leder, dessen Außenschicht/Hautschicht 11 bereits zugerichtet und mit einer Farbschicht, der sogenannten Zurichtung 12, versehen ist. Der äußerste Bereich der Außenschicht 11, der direkt an die Zurichtung angrenzt, weist die höchste Zugfestigkeit auf. Von der Innenseite 13 (Fleischseite des Leders), die auch als Veloursseite bezeichnet wird, werden mit Hilfe eines Werkzeugs 14 mit Perforationsklingen 14.1 Perforationen 15 eingebracht, die durch senkrechtes Einführen des Werkzeugs 14 inklusive der Klinge 14.1 in die Innenseite 13 erzeugt werden, wobei die Perforationen 15 die Hautschicht 11 und die Farbschicht 12 vollständig durchdringen. Die Figur 2 zeigt im Querschnitt ein Bezugmaterial 10 aus Leder, welches im Verbund mit einem sonstigen automobilen Dekormaterial 19 perforiert wird.

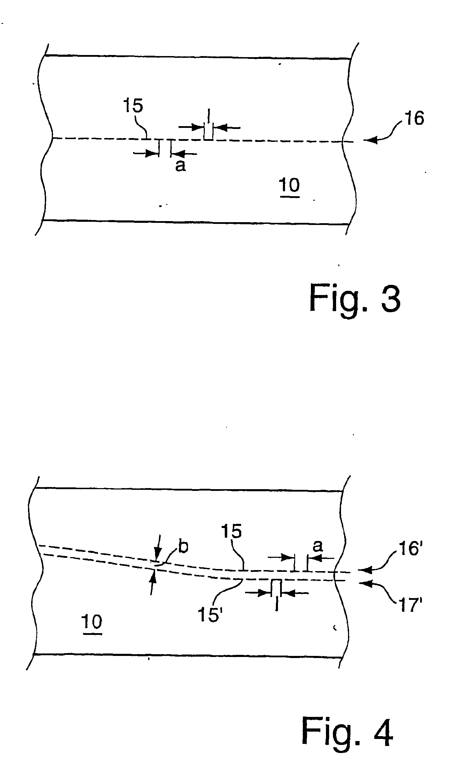

Wie die Figuren 3 u.nd 4 erläutern, können die mit Hilfe des Werkzeugs 14 eingebrachten Perforationen 15, 15' auf einer Linie 16 oder mehreren parallelen Linien 16', 17' liegen, die einer Geraden folgen oder von einer Geraden abweichende Schwächungsstrukturen bilden, wobei die Länge der Perforationen 15 ungefähr dem Abstand a zwischen zwei Perforationen 15 entsprechen kann. Der Abstand b der beiden Linien 16 und 17 zueinander ist im dargestellten Beispiel ungefähr das 0,6-fache der Länge 1 der Perforationen 15. Hier sind jedoch beliebige Variationen möglich. Im dargestellten Beispiel sind außerdem die Perforationen 15 der Linien 16 und 17 gegeneinander versetzt. Diese Anordnung ist günstig, um das Aufreißverhalten positiv zu beeinflussen.

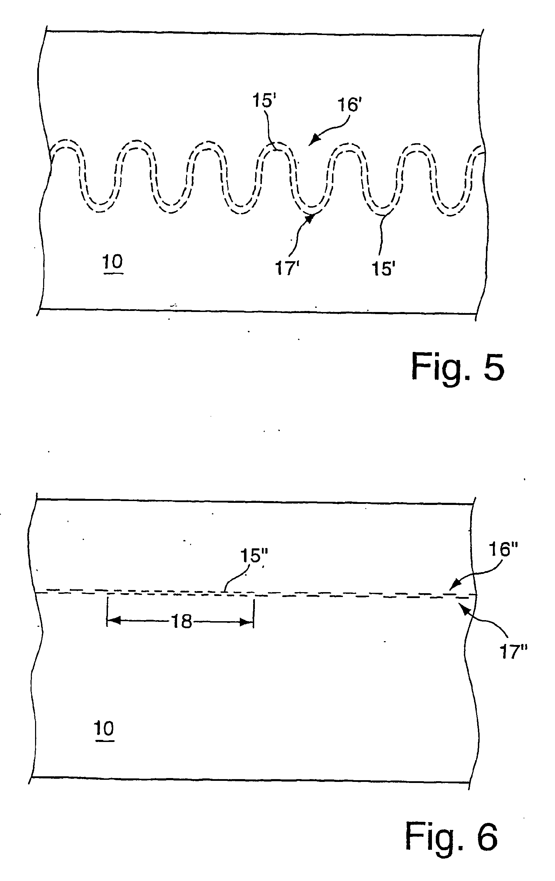

Figur 5 zeigt wie die Figuren 3 und 4 eine Draufsicht auf einen Teilausschnitt eines Bezugmaterials 10, insbesondere eines automobilen Dekormaterials wie Leder, Kunstleder, Stoff oder dergleichen. Schwächungsstrukturen 16' und 17' sind wellenförmig ausgebildet, und die Perforationen 15' sind derart gesetzt, dass sich das Werkzeug 14 stets bei fortlaufenden Perforationen 15' so weit dreht, dass sich eine gewünschte Wellenform oder eine andere beliebige Form von einer oder von mehreren Schwächungsstrukturen 16' und 17' erzeugen lassen. Über die Perforationen 15' können gewünschte Perforierungen/Schwächungsstrukturen hergestellt werden, die ein gleichmäßiges Aufreißverhalten unter Belastung zeigen. Die Perforierungen/Schwächungsstrukturen sind so gewählt, dass sie, auch wenn sie das Bezugmaterial 10 beziehungsweise den Materialverbund 10 und 19 vollkommen durchdringen, nicht sichtbar sind.

Die erfindungsgemäßen Perforationen erfolgen in das Bezugmaterial 10 beziehungsweise in den Materialverbund 10 und 19 immer im unkaschierten Zustand des Bezugmaterials 10 beziehungsweise den Materialverbund 10 und 19 von der Innenseite 13, 13' (Fleischseite).

Figur 6 zeigt wie die Figuren 3, 4 und 5 eine Draufsicht auf einen Teilausschnitt eines Bezugmaterials 10, insbesondere ein automobiles Dekormaterial wie Leder, Kunstleder, Stoff oder dergleichen. Die Schwächungsstrukturen 16" und 17" sind geradlinig ausgebildet und die Perforationen 15" sind derart gesetzt, dass sie in dem Bereich 18 eine partielle Verdichtung der Perforationen aufweisen.

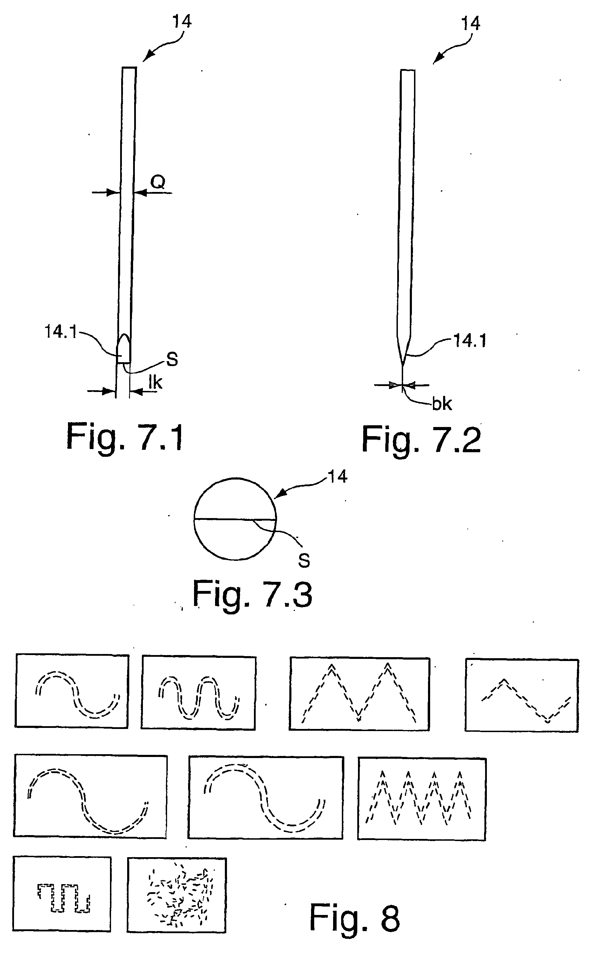

Figuren 7.1, 7.2 und 7.3 zeigen das Werkzeug 14 zur Erzeugung der Perforationen 15 in der Seiten- 7.1, in der Vorderansicht 7.2 und in der Draufsicht 7.3. Das Werkzeug 14 weist an seiner Spitze eine Verjüngung in Form einer Perforationsklinge oder -schneide 14.1 auf, die die Perforationen 15, 15', 15" im Bezugmaterial 10 beziehungsweise in den Materialverbund 10 und 19 erzeugt. In der dargestellten Form weist das Werkzeug 14 einen kreisförmigen Querschnitt Q auf. Es kann jedoch auch vorteilhaft sein, wenn das Werkzeug einen quadratischen oder rechteckförmigen Querschnitt aufweist, weil in solchen Fällen das Werkzeug immer ausgerichtet in der Werkzeugaufnahme fixiert werden kann. Das erfindungsgemäß verwendete Werkzeug weist eine scharfe, bevorzugt geschliffene Schneid- bzw. Klingenfläche S auf.

Die Schneide beziehungsweise Klinge des Werkzeugs sollte vorzugsweise so geformt sein, dass die Lederfasern bei einem senkrechten Herabsenken der Schneide nicht seitlich weggeschoben werden, sondern vielmehr nur eine senkrecht von oben wirkende Kraft auf die Fasern einwirkt, die dann bei einem weiteren Absenken der Schneidnadel zu einem Zerschneiden der Fasern führt.

Vorteilhaft ist es dabei, das Werkzeug mit einer sehr hohen Beschleunigung bzw. Geschwindigkeit in das Material einzubringen, so dass die Lederfasern aufgrund derer Massenträgheit nicht seitlich ausweichen können.

Weniger geeignet wäre eine runde Klinge mit einer kegelförmigen Spitze, da bei solch einer Geometrie ein Grossteil der Fasern nicht zerschnitten, sondern vielmehr nur seitlich entlang der kegelförmigen Nadelspitze verdrängt würden, so dass der die Festigkeit bewirkende Faserverband nicht vollständig durchtrennt wird, wie es beispielsweise bei handelsüblichen Nähnadeln der Fall ist.

Um eine wirksame Durchtrennung der erforderlichen Anzahl von Fasern über eine bestimmte Länge zu erreichen, ist die Werkzeugspitze ähnlich der Spitze eines Schraubendrehers geformt, und die Schneidkante S selbst ist strichförmig beziehungsweise rechteckig mit zwei sehr langen und zwei sehr kurzen Kanten.

Prinzipiell kann die Schneide des Werkzeugs auch anders "geformt sein, beispielsweise mit einer eher dreieckigen oder eher viereckigen Grundfläche oder auch halbmondförmig, so lange eine maximale Länge des Schnittes von weniger als 0,8 mm gewährleistet ist und der Schnitt nicht von solch einer Breite ist, dass der Schnitt beim Ziehen des Leders auseinander klafft und somit gut sichtbar ist.

Die ebene, horizontal verlaufende Klinge hat weiterhin den Vorteil, dass die Schneidfläche wenig verschleißt. Bei den erfindungsgemäßen Überzügen verbleiben in Folge des vollständigen Durchstoßens des Materials, zwischen zwei benachbarten Ausnehmungen Stege, die sich zu einer entlang der Schwächungsstruktur verlaufenden Perforationslinie ergänzen.

Des Weiteren kann es vorteilhaft sein, zwei baugleiche Perforationswerkzeuge in definiertem Abstand zueinander fest zu montieren und das Bezugmaterial so gleichzeitig auf parallelen Schwächungsstrukturen zu schwächen, wodurch die benötigten Fertigungszeiten reduziert werden können. Die Werkzeuge können dabei vorzugsweise in einem Abstand von minimal 0,1 mm definiert miteinander verbunden sein.

Für die Erzeugung von Schwächungsstrukturen in einem Bezugsmaterial zur Abdeckung einer Airbagklappe werden auf der Innenseite 13 des Bezugsmaterials 10 Perforationen 15, 15', 15" über ein Werkzeug 14 mit einer Perforationsklinge 14.1 erzeugt, wobei die Perforationen 15, 15', 15" über intermittierende Schnitte oder Stanzungen in das Bezugsmaterial 10 von der Innenseite 13 her eingebracht werden. Die über die Perforationen 15, 15', 15" erzeugte Schwächungsstruktur ist von einer Geraden abweichend gewählt, damit ein konstantes, sicheres, definiertes Aufreißverhalten des Bezugsmaterials 10 unter Belastung gewährleistet wird. Bei beliebigen Linienbildem von Schwächungsstrukturen, die über die Perforationen erzeugt werden, wird in einer bevorzugten Ausführungsform die Klinge beziehungsweise Schneide des Werkzeugs zu dem gewünschten Linienbild ausgerichtet, das heißt, die Klinge beziehungsweise Schneide des Werkzeugs fluchtet mit der zu erzeugenden Schwächuhgsstruktur. Fluchten heißt in diesem Zusammenhang, dass die Schneide beziehungsweise Klinge des Werkzeugs längs einer gewünschten Linienführung oder parallel dazu ausgerichtet ist.

In Figur 8 sind schematisch weitere mögliche Verläufe von Schwächungsstrukturen, Verläufe der Schwächungsstrukturen zueinander und Anordnungen der Perforationen und deren Länge dargestellt. Die letzte Abbildung zeigt, dass auch die statistische Verteilung der Perforationen über einen gewissen Bereich prinzipiell möglich ist.

### VERGLEICHSVERSUCHE

Getestet wurden Lederzuschnitte, bei denen
a) die Schwächung mittels Laser eingebracht wurde "Laserverfahren",
b) Lederzuschnitte, bei denen die Schwächung mit einem Hinterschnitt eingebracht und dabei auf Restwandstärke gearbeitet wurde ("Hinterschnitt")
c) Lederzuschnitte, mit den erfindungsgemäß das Leder vollständig durchquerende Perforationen die in jeweils zwei zueinander verlaufenden parallelen Reihen angeordnet sind, wobei die Perforationen in einer Reihe auf Lücke der Perforationen der anderen Reihe angeordnet sind.

In der nachfolgenden Tabelle sind die Ergebnisse der einzelnen Vergleichsversuche, die anschließend beschrieben sind, zusammengefasst:

| | **a) Laserverfahren** | **b) Hinterschnitt** | **c) Erfindungsgemäßes Verfahren** |
|---|---|---|---|
| 1. Sichtbarkeit der Schwächung vor Prüfbeginn | deutlich sichtbar | leicht sichtbar | unsichtbar |
| 2. Eindruck Prüfung | | bis 320 N keine Veränderung sichtbar | bis 323,56 N keine Veränderung sichtbar |
| 3. Reibechtheitsprüfung trocken | | keine Veränderungen sichtbar; Graumaßstab 5 | keine Veränderungen sichtbar; Graumaßstab 5 |
| 4. Reibechtheitsprüfung nass | | keine Veränderungen sichtbar; Graumaßstab 5 | keine Veränderungen sichtbar; Graumaßstab 5 |
| 5. Medienbeständigkeit (Tropfentest) | | keine Veränderungen sichtbar | keine Veränderungen sichtbar |
| 6. Sonnensimulation | | Schwächung sichtbar | Schwächung nicht sichtbar |
| 7. Klimawechseltest | | Schwächung deutlich sichtbar | Schwächung nicht sichtbar |
| 8. Zugprüfung | Man benötigt noch 65,25 % der Zugkraft | Man benötigt noch 82,65 % der Zugkraft | Man benötigt noch 50,60 % der Zugkraft |

Die Ergebnisse der durchgeführten Testreihen Eindrückprüfung, Reibechtheitsprüfung trocken wie nass und der Tropfentest werden aufgrund ihrer gleichgelagerten Ergebnisse nicht näher spezifiziert.

Die Testergebnisse des durchgeführten Klimawechseltests sowie der Sonnensimulation und der Zugversuche sollen im folgenden näher erläutert werden:

### 6. Sonnensimulation

Test basiert auf der DIN 75220
Parameter:
   - Indoor-Bedingungen; Beanspruchungszone 1
   - 15 Zyklen Trockenklima: 80 +/- 3 °C; < 30 % r.L. 830 +/- 80 W/m²
   - 10 Zyklen Feuchtklima: 80 +/- 3°C; > 40 % r.L. 830 +/- 80 W/m²
Ziel: Keine Veränderungen des Farbtons beziehungsweise der Struktur der Oberfläche
   Kein Öffnen beziehungsweise Sichtbarwerden der Schwächungsstruktur

### 7. Klimawechseltest

Parameter:
   - 30 Zyklen
   - 4 Stunden / 10°C / 92% rL + 2 Stunden /120°C / max. 20% rL
Ziel: Keine Veränderungen des Farbtons beziehungsweise der Struktur der Oberfläche
   Kein Öffnen beziehungsweise Sichtbarwerden der Schwächungslinie

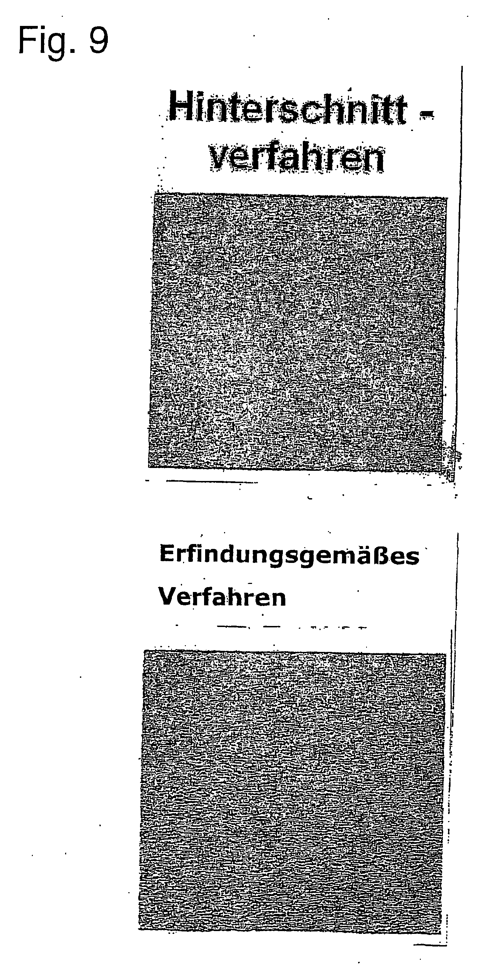

Die Ansicht der Schwächungsstruktur vom Hinterschnitt und dem erfindungsgemäßen Verfahren ist in der beiliegenden **Figur 9** dargestellt.

### 8. Zugprüfung

Parameter:
   - Jeweils 10 geschwächte und 10 ungeschwächte Proben
   - Proben müssen in gleicher Zugrichtung liegen
   - Probenentnahme dicht beieinander
Ziel: Definiertes Einreißen der Schwächungsstruktur; hohe Abweichungen von ungeschwächtem zu geschwächtem Leder (großer Schwächungserfolg). Dies entspricht einem geringen prozentualen Wert der (nach Schwächung) noch benötigten Zugkraft.

## Patentansprüche

1. Überzug als Abdeckung eines Airbags im Innenraum eines Kraftfahrzeugs, welcher Überzug aus einem Bezugsmaterial ist, das im Bereich der Berandung der Airbagklappe, voneinander beabstandete, das Material vollständig durchdringende Perforationen aufweist, die eine im Wesentlichen linienförmige Form aufweisen **dadurch gekennzeichnet dass** deren Länge höchstens 0,8 mm beträgt.

2. Überzug nach Anspruch 1, **dadurch gekennzeichnet, dass** die Perforationen hintereinander angeordnet sind.

3. Überzug nach Anspruch 1 oder 2, **dadurch gekennzeichnet, dass** die Länge einer Perforation höchstens 0,6 mm beträgt und insbesondere zwischen 0,2 und 0,4 mm liegt.

4. Überzug nach Anspruch 1, 2 oder 3, **dadurch gekennzeichnet, dass** die Breite der Perforation höchstens 0,2 mm und vorzugsweise höchstens 0,1 mm beträgt.

5. Überzug nach einem der Ansprüche 1 bis 4, **dadurch gekennzeichnet, dass** die Perforationen im Wesentlichen regelmäßig voneinander beabstandet sind.

6. Überzug nach einem der Ansprüche 1 bis 5, **dadurch gekennzeichnet, dass** die Anzahl der Perforationen bereichsweise partiell verdichtet/erhöht bzw. reduziert ist.

7. Überzug nach einem der Ansprüche 1 bis 6, **dadurch gekennzeichnet, dass** der Abstand a zwischen den Mittelpunkten zweier benachbarten Perforationen maximal das 3-fache und insbesondere das 1 bis 1,5-fache der Länge I der Perforation beträgt, insbesondere, wenn die Perforationen entlang einer gemeinsamen Linie angeordnet sind.

8. Überzug nach einem der Ansprüche 1 bis 7, **dadurch gekennzeichnet, dass** der Abstand a zwischen den Mittelpunkten zweier benachbarten Perforationen maximal das 3-fache und insbesondere das 1,3- bis 1,7-fache der Länge der Perforation beträgt, insbesondere, wenn die Perforationen entlang mehrerer im Wesentlichen parallel zueinander angeordneten Linien angeordnet sind.

9. Überzug nach einem der Ansprüche 1 bis 8, **dadurch gekennzeichnet, dass** die Perforationen (15, 15') im Wesentlichen auf einer oder mehreren geraden oder gekrümmten Linien (16, 17) liegen, wobei dann, wenn die Perforationen auf mehreren Linien liegen, diese im Wesentlichen parallel zueinander verlaufen und ihr Abstand b maximal die 1,5-fache Pertorationslänge l und besonders bevorzugt zwischen der 0,3- und 0,7-fachen Perforationslänge zueinander beträgt.

10. Überzug nach einem der Ansprüche 1 bis 9, **dadurch gekennzeichnet, dass** die Perforationen auf wenigstens zwei zueinander parallelen Linien (16, 17) angeordnet sind und die Perforationen auf der ersten Linie (16) im Wesentlichen auf Lücke der Perforationen an der zweiten Linie (17) stehen.

11. Überzug nach einem der Ansprüche 1 bis 10, **dadurch gekennzeichnet, dass** die Linien (16, 17) gerade und/ oder geschwungene (alternierende) Linien sind und/oder zickzackförmig, wellenförmig oder sinusförmig oder in einer sich wiederholenden gleichförmigen Geometrie im Bereich der Schwächungslinie verlaufen.

12. Überzug nach einem der Ansprüche 1 bis 11, **dadurch gekennzeichnet, dass** die Amplitude eine Schwächungsstruktur zwischen 0,75 und 3,5 mm und Insbesondere etwa 1,25 mm beträgt,

13. Überzug nach einem der Ansprüche 1 bis 12, **dadurch gekennzeichnet, dass** das Bezugsmaterial aus Leder ist oder Leder, insbesondere Leder mit einer Beschichtung oder Leder im Materialverbund oder Kunstleder bzw. Slush, umfasst.

14. Überzug nach einem der oder Ansprüche 1 bis 13 **dadurch gekennzeichnet, dass** als Bezugsmaterial ein Verbund aus zwei fest miteinander verbundenen Materialschichten vorgesehen ist, wobei die eine Materialschicht aus einem automobilen Dekormaterial wie Leder oder Kunstleder und die zweite Materialschicht aus einem Schaum, Abstandsgewirk, Vlies oder Textil besteht.

15. Überzug nach einem der Ansprüche 1 bis 14, **dadurch gekennzeichnet, dass** das Bezugsmaterial mit nur einer Materialschicht eine Dicke von 0,4 mm bis 1,6 mm aufweist,

16. Überzug nach einem der Ansprüche 1 bis 15, **dadurch gekennzeichnet, dass** das Bezugsmaterial, das wenigstens zwei miteinander verbundene Materialschichten aufweist, eine Dicke von mehr als 0,5 mm und insbesondere zwischen 1 und 20 mm aufweist.

17. Verfahren zur Herstellung eines Überzugs zur Abdeckung eines Airbags im Innenraum eines Kraftfahrzeugs, insbesondere nach einem der Ansprüche 1 bis 16, **dadurch gekennzeichnet, dass** von der Innenseite des Bezugsmaterials her in dessen unkaschiertem Zustand in dem Bereich, der nach dem Aufkaschieren des Bezugsmaterials auf die Abdeckung des Airbags die Berandung der Airbagklappe abdeckt, hintereinander angeordnete, voneinander beabstandete, das Bezugsmaterial vollständig durchdringende Perforationen mit einer maximalen Länge von 0,8 mm in das Bezugsmaterial eingebracht werden.

18. Verfahren nach Anspruch 17, **dadurch gekennzeichnet, dass** die Perforationen mit Hilfe eines Werkzeugs (14), das eine länglich, schneidenartige Klinge oder Schneide (14.1) mit einer sehr scharfen Schnittfläche aufweist, eingebracht werden.

19. Verfahren nach einem der Ansprüche 17 bis 18, **dadurch gekennzeichnet, dass** während des Perforierens die Schnitt-, Perforationsklinge des Werkzeugs parallel der Lederoberseite verläuft.

20. Verfahren nach einem der Ansprüche 17 bis 19, **dadurch gekennzeichnet, dass** sich das Werkzeug (14) bei der Herstellung einer beliebigen. Schwächungsgeometrie in einer definierten Hochtiefbewegung intermittierend stanzend vorwärts bewegt.

21. Verfahren nach einem der Ansprüche 17 bis 20, **dadurch gekennzeichnet, dass** die Klinge höchstens 0,8 mm, insbesondere zwischen 0,2 und 0,4 mm und insbesondere zwischen 0,25 und 0,35 mm, lang ist.

22. Verfahren nach einem der Ansprüche 17 bis 21, **dadurch gekennzeichnet, dass** die Klinge an ihrer vordersten Schnittfläche höchstens 0,2 mm und insbesondere kleiner als 0,1 mm breit ist.

23. Verfahren nach einem der Ansprüche 17 bis 22, **dadurch gekennzeichnet, dass** sich das Werkzeug (14) bei der Herstellung einer von einer geraden Linie abweichenden Schwächungsgeometrie dreht und mit der gewünschten Linienführung der Schwächungsgeometrie fluchtet.

24. Verfahren nach einem der Ansprüche 17 bis 23, **dadurch gekennzeichnet, dass** mit Hilfe zweier oder mehrerer in einem festen gegenseitigen Abstand von minimal 0,1 mm angeordneter Werkzeuge (14) zwei oder mehrere parallele Schwächungslinien gleichzeitig in das Bezugsmaterial (10) eingebracht werden.

## Claims

1. Cover for covering an airbag in the interior of a motor vehicle, which cover is made from a cover material which has interspaced perforations which fully penetrate the material in the region of the edge of the airbag flap and have an essentially linear form, **characterized in that** the length of said perforations is not more than 0.8 mm.

2. Cover according to Claim 1, **characterized in that** the perforations are arranged one behind another.

3. Cover according to Claim 1 or 2, **characterized in ,that** the length of a perforation is not more than 0.6 mm and in particular is between 0.2 and 0.4 mm.

4. Cover according to Claim 1, 2 or 3, **characterized in that** the width of the perforation is not more than 0.2 mm and preferably is not more than 0.1 mm.

5. Cover according to one of Claims 1 to 4, **characterized in that** the perforations are essentially regularly interspaced.

6. Cover according to one of Claims 1 to 5, **characterized in that** the number of perforations is partially consolidated/increased or reduced in some regions.

7. Cover according to one of Claims 1 to 6, **characterized in that** the distance a between the centre points of two adjacent perforations is at maximum 3 times and, in particular, 1 to 1.5 times the length 1 of the perforation, in particular if the perforations are arranged along a common line.

8. Cover according to one of Claims 1 to 7, **characterized in that** the distance a between the centre points of two adjacent perforations is at maximum 3 times and, in particular, 1.3 to 1.7 times the length 1 of the perforation, in particular if the perforations are arranged along a plurality of lines arranged essentially parallel to one another.

9. Cover according to one of Claims 1 to 8, **characterized in that** the perforations (15, 15') lie essentially on one or more straight or curved lines (16, 17), in which case, if the perforations lie on the plurality of lines, they run essentially parallel to one another and their distance b from one another is at maximum 1.5 times the perforation length 1 and, particularly preferably, between 0.3 and 0.7 times the perforation length.

10. Cover according to one of Claims 1 to 9, **characterized in that** the perforations are arranged on at least two mutually parallel lines (16, 17), and the perforations on the first line (16) are essentially staggered with respect to the perforations of the second line (17).

11. Cover according to one of Claims 1 to 10, **characterized in that** the lines (16, 17) are straight and/or curved (alternating) lines and/or are zigzag-shaped, wave-shaped or sinusoidal or run in a repetitive, uniform geometry in the region of the weakening line.

12. Cover according to one of Claims 1 to 11, **characterized in that** the amplitude of a weakening structure is between 0.75 and 3.5 mm and, in particular, is approximately 1.25 mm.

13. Cover according to one of Claims 1 to 12, **characterized in that** the cover material is made from leather or comprises leather, in particular leather with a coating or leather in the material composite or imitation leather or slush.

14. Cover according to one of Claims 1 to 13, **characterized in that** a composite made of two fixedly interconnected material layers is provided as the cover material, with the one material layer consisting of an automobile decorative material, such as leather or imitation leather, and the second material layer consisting of a foam, spacer knit, nonwoven or textile.

15. Cover according to one of Claims 1 to 14, **characterized in that** the thickness of the cover material with just one material layer is 0.4 mm to 1.6 mm.

16. Cover according to one of Claims 1 to 15, **characterized in that** the thickness of the cover material which has at least two interconnected material layers is more than 0.5 mm and, in particular, between 1 and 20 mm.

17. Method for the production of a cover for covering an airbag in the interior of a motor vehicle, in particular according to one of Claims 1 to 16, **characterized in that** perforations which are arranged one behind another, are interspaced, fully penetrate the cover material and have a maximum length of 0.8 mm are inserted into the cover material from the inside of the cover material in the unlaminated state thereof, in the region which covers the edge of the airbag flap after the cover material is laminated onto the covering of the airbag.

18. Method according to Claim 17, **characterized in that** the perforations are inserted with the aid of a tool (14) which has an elongated, knife-edge-like blade or cutting edge (14.1) with a very sharp cutting surface.

19. Method according to either of Claims 17 and 18, **characterized in that** the cutting and perforating blade of the tool runs parallel to the upper side of the leather during the perforation operation.

20. Method according to one of Claims 17 to 19, **characterized in that**, during the production of any desired weakening geometry, the tool (14) moves forwards in a defined up-down movement with intermittent punching.

21. Method according to one of Claims 17 to 20, **characterized in that** the length of the blade is not more than 0.8 mm, in particular is between 0.2 and 0.4 mm and, in particular, is between 0.25 and 0.35 mm.

22. Method according to one of Claims 17 to 21, **characterized in that** the width of the blade at its frontmost cutting surface is not more than 0.2 mm and, in particular, is smaller than 0.1 mm.

23. Method according to one of Claims 17 to 22, **characterized in that**, during the production of a weakening geometry deviating from a straight line, the tool (14) rotates and is aligned with the desired route of the weakening geometry.

24. Method according to one of Claims 17 to 23, **characterized in that** two or more parallel weakening lines are inserted simultaneously into the cover material (10) with the aid of two or more tools (14) arranged at a minimum fixed mutual distance of 0.1 mm.

## Revendications

1. Revêtement servant de recouvrement pour un airbag dans l'habitacle d'un véhicule automobile, lequel revêtement est constitué d'un matériau de revêtement qui présente dans la région du bord du volet d'airbag des perforations espacées les unes des autres et traversant complètement le matériau, lesquelles présentent une forme sensiblement linéaire, **caractérisé en ce qu'**elles mesurent au plus 0,8 mm de long.

2. Revêtement selon la revendication 1, **caractérisé en ce que** les perforations sont disposées les unes derrière les autres.

3. Revêtement selon la revendication 1 ou 2, **caractérisé en ce qu'**une perforation mesure au plus 0,6 mm de long et notamment entre 0, 2 et 0, 4 mm.

4. Revêtement selon la revendication 1, 2 ou 3, **caractérisé en ce que** la perforation mesure au plus 0,2 mm de large et de préférence au plus 0,1 mm de large.

5. Revêtement selon l'une quelconque des revendications 1 à 4, **caractérisé en ce que** les perforations sont espacées sensiblement régulièrement les unes des autres.

6. Revêtement selon l'une quelconque des revendications 1 à 5, **caractérisé en ce que** le nombre de perforations est par endroits partiellement comprimé/augmenté ou réduit.

7. Revêtement selon l'une quelconque des revendications 1 à 6, **caractérisé en ce que** la distance a entre les centres de deux perforations adjacentes correspond au maximum au triple et notamment à 1 à 1,5 fois la longueur 1 des perforations, notamment lorsque les perforations sont disposées le long d'une ligne commune.

8. Revêtement selon l'une quelconque des revendications 1 à 7, **caractérisé en ce que** la distance a entre les centres de deux perforations adjacentes correspond au maximum au triple et notamment à 1,3 à 1,7 fois la longueur 1 des perforations, notamment lorsque les perforations sont disposées le long de plusieurs lignes disposées sensiblement parallèlement les unes aux autres.

9. Revêtement selon l'une quelconque des revendications 1 à 8, **caractérisé en ce que** les perforations (15, 15') sont situées sensiblement sur une ou plusieurs lignes droites ou courbes (16, 17), et lorsque les perforations sont situées sur plusieurs lignes, **en ce qu'**elles s'étendent sensiblement parallèlement les unes aux autres et **en ce que** leur distance b correspond au maximum à 1,5 fois la longueur 1 des perforations et particulièrement de préférence à 0,3 à 0,7 fois la longueur des perforations les unes par rapport aux autres.

10. Revêtement selon l'une quelconque des revendications 1 à 9, **caractérisé en ce que** les perforations sont disposées sur au moins deux lignes parallèles (16, 17) et **en ce que** les perforations sur la première ligne (16) sont sensiblement disposées au niveau de vides des perforations de la deuxième ligne (17).

11. Revêtement selon l'une quelconque des revendications 1 à 10, **caractérisé en ce que** les lignes (16, 17) sont des lignes droites et/ou incurvées (en alternance.) et/ou s'étendent en zigzag, sous forme ondulée ou sinusoïdale ou suivant une géométrie uniforme récurrente dans la région de la ligne d'affaiblissement.

12. Revêtement selon l'une quelconque des revendications 1 à 11, **caractérisé en ce que** l'amplitude d'une structure d'affaiblissement est comprise entre 0,75 et 3,5 mm, et vaut notamment environ 1,25 mm.

13. Revêtement selon l'une quelconque des revendications 1 à 12, **caractérisé en ce que** le matériau de revêtement est en cuir ou comprend du cuir, notamment du cuir revêtu ou du cuir en composite ou du cuir synthétique ou du Slush.

14. Revêtement selon l'une quelconque des revendications 1 à 13, **caractérisé en ce que** l'on prévoit comme matériau de revêtement un composite constitué de deux couches de matériau assemblées fixement l'une à l'autre, l'une des couches de matériau se composant d'un matériau décoratif pour automobile comme du cuir ou du cuir synthétique et la deuxième couche de matériau se composant d'une mousse, d'un maillage d'espacement, d'un voile ou d'un textile.

15. Revêtement selon l'une quelconque des revendications 1 à 14, **caractérisé en ce que** le matériau de revêtement avec seulement une couche de matériau présente une épaisseur de 0,4 mm à 1,6 mm.

16. Revêtement selon l'une quelconque des revendications 1 à 15, **caractérisé en ce que** le matériau de revêtement qui présente au moins deux couches de matériau assemblées l'une à l'autre présente une épaisseur de plus de 0,5 mm, notamment comprise entre 1 et 20 mm.

17. Procédé de fabrication d'un revêtement pour le recouvrement d'un airbag dans l'habitacle d'un véhicule automobile, notamment selon l'une quelconque des revendications 1 à 16, **caractérisé en ce que** des perforations espacées les unes des autres et disposées les unes derrière les autres, traversant complètement le matériau de revêtement, sont pratiquées dans le matériau de revêtement avec une longueur maximale de 0,8 mm, depuis le côté intérieur du matériau de revêtement dans son état non contre-collé, dans la région qui recouvre le bord du volet d'airbag après le contre-collage du matériau de revêtement sur le recouvrement de l'airbag.

18. Procédé selon la revendication 17, **caractérisé en ce que** les perforations sont pratiquées à l'aide d'un outil (14) qui présente une lame ou un élément de coupe allongé(e) de type couteau (14.1) avec une surface de coupe acérée.

19. Procédé selon l'une quelconque des revendications 17 à 18, **caractérisé en ce que** pendant la perforation, la lame de coupe ou de perforation de l'outil s'étend parallèlement à la surface du cuir.

20. Procédé selon l'une quelconque des revendications 17 à 19, **caractérisé en ce que** l'outil (14), pendant la création d'une géométrie d'affaiblissement quelconque, se déplace vers l'avant par estampage intermittent dans un mouvement plongeant défini.

21. Procédé selon l'une quelconque des revendications 17 à 20, **caractérisé en ce que** la lame mesure au plus 0,8 mm, notamment entre 0,2 et 0,4 mm et en particulier entre 0,25 et 0,35 mm de long.

22. Procédé selon l'une quelconque des revendications 17 à 21, **caractérisé en ce que** la lame mesure au niveau de sa surface de coupe avant au plus 0,2 mm et notamment moins de 0,1 mm de large.

23. Procédé selon l'une quelconque des revendications 17 à 22, **caractérisé en ce que** l'outil (14) lors de la création d'une géométrie d'affaiblissement s'écartant d'une ligne droite, est tourné et vient en affleurement avec la trajectoire linéaire souhaitée de la géométrie d'affaiblissement.

24. Procédé selon l'une quelconque des revendications 17 à 23, **caractérisé en ce qu'**à l'aide de deux outils (14) disposés à distance mutuelle fixe l'un de l'autre d'au moins 0,1 mm, on peut pratiquer simultanément au moins deux lignes d'affaiblissement parallèles dans le matériau de revêtement (10).
